# EUROPEAN PATENT APPLICATION

(11) **EP 4 568 318 A1**
(43) Date of publication of application: **11.06.2025**
(21) Application number: 23848991.8
(22) Date of filing: 17.05.2023
(51) Int. Cl.: H04W 24/02

(54) **CANDIDATE CELL CONFIGURATION METHOD AND APPARATUS**

(30) Priority: 04.08.2022 CN 202210931885
(71) Applicant: Datang Mobile Communications Equipment Co., Ltd., Beijing 100085 (CN)
(72) Inventor: SUN, Jiaying, Beijing 100085 (CN); ZHANG, Dajun, Beijing 100085 (CN); ZHANG, Bufang, Beijing 100085 (CN); YAN, Xue, Beijing 100085 (CN); LIANG, Jing, Beijing 100085 (CN)
(74) Representative: Studio Torta S.p.A.
(86) International application number: PCT/CN2023/094720
(87) International publication number: WO 2024/027281

(57) **Abstract**

Provided in the present disclosure are a candidate cell configuration method and apparatus. The method includes: a central unit (CU) sending a request message to a first distribute unit (DU), the request message being used for requesting information related to candidate cell configuration for a terminal, wherein the first DU is a DU where candidate cells are located; the CU receiving the information related to candidate cell configuration, which is sent by the first DU; and the CU configuring a candidate cell for the terminal.

## Description

### CROSS-REFERENCE TO RELATED APPLICATION

This disclosure claims the priority of Chinese Patent Application No. 202210931885.1 filed in China on August 04, 2022, the disclosure of which is hereby incorporated by reference in its entirety.

### TECHNICAL FIELD

The present disclosure relates to the field of communications technologies, and in particular, to a candidate cell configuration method and apparatus.

### BACKGROUND

For support of Layer 1 (L1) or L2 mobility, serving cell change and/or addition in this scenario is triggered by an L1/L2 command. Before the serving cell change and/or addition, some candidate cells need to be configured for user equipment (UE), and information of the candidate cells is preconfigured for the UE, so that the UE may directly activate a configuration according to L1/L2 signaling.

In the related art, for an intra-DU scenario of a distributed unit (DU), a serving DU and a candidate DU are a same DU, and a cell configuration and transmission configuration indicator (TCI) information of a candidate cell is known to the serving DU. However, for an inter-DU scenario, the serving DU and the candidate DU are different DUs, and the above information cannot be transmitted between interfaces, and as a result, the DU where the serving cell is located cannot learn the above information, and the UE cannot implement pre-configuration.

### SUMMARY

An objective of the present disclosure is to provide a candidate cell configuration method and apparatus, which solve the problem that a candidate cell cannot be preconfigured for an inter-DU scenario terminal.

A candidate cell configuration method applied to a central unit (CU) is provided. The method includes: sending a request message to a first distribution unit DU by a centralized unit CU, wherein the request message is used to request information related to candidate cell configuration of a terminal, wherein the first DU is a DU where a candidate cell is located; receiving, by the CU, the information related to candidate cell configuration from the first DU; and configuring, by the CU, candidate cells for the terminal.

Optionally, the request message includes at least one of the following: identification information of the terminal; a list of first candidate cells; cell identification information of the first candidate cells; physical cell identifier (PCI) information of the first candidate cells; cell global identifier (CGI) information of the first candidate cells; frequency information of the first candidate cells; indication information used to indicate that the request message is used for layer 1 or layer 2 mobility; information related to a reference signal.

Optionally, the information related to candidate cell configuration includes at least one of the following: identification information of the terminal; a list of second candidate cells; cell identification information of the second candidate cells; PCI information of the second candidate cells; CGI information of the second candidate cells; frequency information of the second candidate cells; a list of third candidate cells; assistance information of handover decision; information related to a reference signal; cell configuration information.

Optionally, the information related to a reference signal includes at least one of the following: synchronization signal block (Synchronization Signal and PBCH block, SSB) information of the second candidate cells; Transmission Configuration Indicator (TCI) information of the second candidate cells; information related to a layer 1 channel state reference signal (Channel State Information Reference Signal, CSI-RS) of the second candidate cells.

Optionally, the cell configuration information includes at least one of the following: layer 2 configuration information of the second candidate cells; layer 3 configuration information of the second candidate cells; resource information reserved for a physical layer of the second candidate cells; indication information used to indicate that the cell configuration information is used for layer 1 or layer 2 mobility.

Optionally, the first candidate cells requested in the request message are at least partially the same as or different from the second candidate cells configured in the information related to candidate cell configuration.

Optionally, the sending a request message to the first distribution unit DU includes one of the following: sending the request message to the first DU by extending a first interface message; sending the request message to the first DU by reusing a first interface message; sending the request message to the first DU by newly creating a first interface message.

Optionally, configuring the candidate cell for the terminal includes: sending the information related to candidate cell configuration to a second DU through a first interface; wherein the second DU is a DU where a serving cell currently accessed by the terminal is located.

Optionally, the sending the information related to candidate cell configuration to the second DU through the first interface includes one of the following: sending the information related to candidate cell configuration to the second DU by extending a first interface message; sending the information related to candidate cell configuration to the second DU by reusing a first interface message; sending the information related to candidate cell configuration to the second DU by newly creating a first interface message.

Optionally, configuring the candidate cells for the terminal includes: configuring, by using a radio resource control RRC message, the candidate cells for the terminal.

Optionally, configuring the candidate cells for the terminal by using the RRC message includes: writing the information related to candidate cell configuration into the RRC message, wherein the RRC message is transparently transmitted through the second DU; or, sending the information related to candidate cell configuration to the second DU through a first interface; receiving an information element IE from the second DU, wherein the IE includes the information related to candidate cell configuration written by the second DU; writing the IE into the RRC message, wherein the RRC message is transparently transmitted through the second DU; wherein the second DU is a DU where a serving cell currently accessed by the terminal is located.

A candidate cell configuration method applied to a first DU is provided. The method includes: receiving, by a first distribution unit DU, a request message from a centralized unit CU, wherein the request message is used to request information related to candidate cell configuration of a terminal; sending the information related to candidate cell configuration of the terminal to the CU according to the request message.

Optionally, the request message includes at least one of the following: identification information of the terminal; a list of first candidate cells; cell identification information of the first candidate cells; physical cell identifier (PCI) information of the first candidate cells; cell global identifier (CGI) information of the first candidate cells; frequency information of the first candidate cells; indication information used to indicate that the request message is used for layer 1 or layer 2 mobility; information related to a reference signal.

Optionally, the information related to candidate cell configuration includes at least one of the following: identification information of the terminal; a list of second candidate cells; cell identification information of the second candidate cells; PCI information of the second candidate cells; CGI information of the second candidate cells; frequency information of the second candidate cells; a list of third candidate cells; assistance information of handover decision; information related to a reference signal; cell configuration information.

Optionally, the information related to a reference signal includes at least one of the following: synchronization signal block (SSB) information of the second candidate cells; Transmission Configuration Indicator (TCI) information of the second candidate cells; information related to a layer 1 channel state reference signal (CSI-RS) of the second candidate cells.

Optionally, the cell configuration information includes at least one of the following: layer 2 configuration information of the second candidate cells; layer 3 configuration information of the second candidate cells; resource information reserved for a physical layer of the second candidate cells; indication information used to indicate that the cell configuration information is used for layer 1 or layer 2 mobility.

Optionally, the first candidate cells requested in the request message are at least partially the same as or different from the second candidate cells configured in the information related to candidate cell configuration.

Optionally, the sending the information related to candidate cell configuration of the terminal to the CU includes one of the following: sending the information related to candidate cell configuration to the CU by extending a first interface message; sending the information related to candidate cell configuration to the CU by reusing a first interface message; sending the information related to candidate cell configuration to the CU by newly creating a first interface message.

Optionally, the information related to candidate cell configuration is included in the first interface message in one of following patterns: being explicitly included in the first interface message as an IE; being implicitly included in an IE sent by the first DU to the CU.

A candidate cell configuration apparatus applied to a CU is provided. The apparatus includes: a memory, a transceiver, and a processor, wherein the memory is configured to store a computer program; the transceiver is configured to receive and send data under the control of the processor; and the processor is configured to read the computer program in the memory; the transceiver is configured to: send a request message to a first distribution unit DU, wherein the request message is used to request information related to candidate cell configuration of a terminal, wherein the first DU is a DU where a candidate cell is located; receive the information related to candidate cell configuration from the first DU; the processor is configured to read the computer program in the memory and perform the following operations: configuring candidate cells for the terminal.

Optionally, the request message includes at least one of the following: identification information of the terminal; a list of first candidate cells; cell identification information of the first candidate cells; physical cell identifier (PCI) information of the first candidate cells; cell global identifier (CGI) information of the first candidate cells; frequency information of the first candidate cells; indication information used to indicate that the request message is used for layer 1 or layer 2 mobility; information related to a reference signal.

Optionally, the information related to candidate cell configuration includes at least one of the following: identification information of the terminal; a list of second candidate cells; cell identification information of the second candidate cells; PCI information of the second candidate cells; CGI information of the second candidate cells; frequency information of the second candidate cells; a list of third candidate cells; assistance information of handover decision; information related to a reference signal; cell configuration information.

Optionally, the information related to a reference signal includes at least one of the following: synchronization signal block (SSB) information of the second candidate cells; Transmission Configuration Indicator (TCI) information of the second candidate cells; information related to a layer 1 channel state reference signal (CSI-RS) of the second candidate cells.

Optionally, the cell configuration information includes at least one of the following: layer 2 configuration information of the second candidate cells; layer 3 configuration information of the second candidate cells; resource information reserved for a physical layer of the second candidate cells; indication information used to indicate that the cell configuration information is used for layer 1 or layer 2 mobility.

Optionally, the first candidate cells requested in the request message are at least partially the same as or different from the second candidate cells configured in the information related to candidate cell configuration.

Optionally, the transceiver is specifically configured to perform one of the following: sending the request message to the first DU by extending a first interface message; sending the request message to the first DU by reusing a first interface message; sending the request message to the first DU by newly creating a first interface message.

Optionally, the processor is configured to read the computer program in the memory and perform the following operations: sending the information related to candidate cell configuration to a second DU through a first interface; wherein the second DU is a DU where a serving cell currently accessed by the terminal is located.

Optionally, the processor is configured to read the computer program in the memory and perform one of the following operations: sending the information related to candidate cell configuration to the second DU by extending a first interface message; sending the information related to candidate cell configuration to the second DU by reusing a first interface message; sending the information related to candidate cell configuration to the second DU by newly creating a first interface message.

Optionally, the processor is configured to read the computer program in the memory and perform the following operations: configuring, by using a radio resource control RRC message, the candidate cells for the terminal.

Optionally, the processor is configured to read the computer program in the memory and perform the following operations: writing the information related to candidate cell configuration into the RRC message, wherein the RRC message is transparently transmitted through the second DU; or, sending the information related to candidate cell configuration to the second DU through a first interface; receiving an information element IE from the second DU, wherein the IE includes the information related to candidate cell configuration written by the second DU; writing the IE into the RRC message, wherein the RRC message is transparently transmitted through the second DU; wherein the second DU is a DU where a serving cell currently accessed by the terminal is located.

A candidate cell configuration apparatus applied to a first DU is provided. The apparatus includes: a memory, a transceiver, and a processor: wherein the memory is configured to store a computer program; the transceiver is configured to receive and send data under the control of the processor; and the processor is configured to read the computer program in the memory; wherein the transceiver is configured to receive a request message from a centralized unit CU, wherein the request message is used to request information related to candidate cell configuration of a terminal; the processor is configured to read the computer program in the memory and perform the following operations: sending the information related to candidate cell configuration of the terminal to the CU according to the request message.

Optionally, the request message includes at least one of the following: identification information of the terminal; a list of first candidate cells; cell identification information of the first candidate cells; physical cell identifier (PCI) information of the first candidate cells; cell global identifier (CGI) information of the first candidate cells; frequency information of the first candidate cells; indication information used to indicate that the request message is used for layer 1 or layer 2 mobility; information related to a reference signal.

Optionally, the information related to candidate cell configuration includes at least one of the following: identification information of the terminal; a list of second candidate cells; cell identification information of the second candidate cells; PCI information of the second candidate cells; CGI information of the second candidate cells; frequency information of the second candidate cells; a list of third candidate cells; assistance information of handover decision; information related to a reference signal; cell configuration information.

Optionally, the information related to a reference signal includes at least one of the following: synchronization signal block (SSB) information of the second candidate cells; Transmission Configuration Indicator (TCI) information of the second candidate cells; information related to a layer 1 channel state reference signal (CSI-RS) of the second candidate cells.

Optionally, the cell configuration information includes at least one of the following: layer 2 configuration information of the second candidate cells; layer 3 configuration information of the second candidate cells; resource information reserved for a physical layer of the second candidate cells; indication information used to indicate that the cell configuration information is used for layer 1 or layer 2 mobility.

Optionally, the first candidate cells requested in the request message are at least partially the same as or different from the second candidate cells configured in the information related to candidate cell configuration.

Optionally, the processor is configured to read the computer program in the memory and perform one of the following operations: sending the information related to candidate cell configuration to the CU by extending a first interface message; sending the information related to candidate cell configuration to the CU by reusing a first interface message; sending the information related to candidate cell configuration to the CU by newly creating a first interface message.

Optionally, the information related to candidate cell configuration is included in the first interface message in one of following patterns: being explicitly included in the first interface message as an IE; being implicitly included in an IE sent by the first DU to the CU.

A candidate cell configuration apparatus applied to a CU is provided. The apparatus includes: a first sending unit, configured to send a request message to a first distribution unit DU, wherein the request message is used to request information related to candidate cell configuration of a terminal, wherein the first DU is a DU where a candidate cell is located; a first receiving unit, configured to receive the information related to candidate cell configuration from the first DU; a configuration unit, configured to configure candidate cells for the terminal.

A candidate cell configuration apparatus applied to a first DU is provided. The apparatus includes: a second receiving unit, configured to receive a request message from a centralized unit CU, wherein the request message is used to request information related to candidate cell configuration of a terminal; and a second sending unit, configured to send the information related to candidate cell configuration of the terminal to the CU according to the request message.

A processor-readable storage medium is provided, wherein the processor-readable storage medium stores a computer program, and the computer program is configured to cause a processor to execute the candidate cell configuration method mentioned above.

The above technical solutions of the present disclosure have the following beneficial effects.

In an embodiment of the present disclosure, the CU sends a request message to the first DU where the candidate cell is located, to request the first DU to configure the information related to the candidate cell for the terminal, and after receiving the information related to candidate cell configuration sent by the first DU, the CU configures the information related to candidate cell configuration to the terminal, thereby implementing cross-DU candidate cell configuration.

### BRIEF DESCRIPTION OF THE DRAWINGS

FIG. 1 is a first schematic flowchart of a candidate cell configuration method according to an embodiment of the present disclosure;
FIG. 2 is a second schematic flowchart of a candidate cell configuration method according to an embodiment of the present disclosure;
FIG. 3 is a third schematic flowchart of a candidate cell configuration method according to an embodiment of the present disclosure;
FIG. 4 is a fourth schematic flowchart of a candidate cell configuration method according to an embodiment of the present disclosure;
FIG. 5 is a first schematic structural diagram of a candidate cell configuration apparatus according to an embodiment of the present disclosure;
FIG. 6 is a second schematic structural diagram of a candidate cell configuration apparatus according to an embodiment of the present disclosure;
FIG. 7 is a third schematic structural diagram of a candidate cell configuration apparatus according to an embodiment of the present disclosure;
FIG. 8 is a fourth schematic structural diagram of a candidate cell configuration apparatus according to an embodiment of the present disclosure.

### DETAILED DESCRIPTION

In order to make the technical problems, technical solutions and advantages to be solved by the present disclosure clearer, the following describes in detail with reference to the accompanying drawings and specific embodiments. In the following description, specific details such as specific configurations and components are provided merely to facilitate a thorough understanding of embodiments of the present disclosure. Therefore, those skilled in the art should understand that various changes and modifications can be made to the embodiments described herein without departing from the scope and spirit of the present disclosure. In addition, descriptions of known functions and constructions are omitted for clarity and conciseness.

It should be understood that "one embodiment" or "an embodiment" mentioned throughout the specification means that a particular feature, structure, or characteristic related to the embodiment is included in at least one embodiment of the present disclosure. Therefore, "in one embodiment" or "in an embodiment" appearing throughout the specification does not necessarily refer to the same embodiment. Furthermore, the particular features, structures, or characteristics may be combined in any suitable manner in one or more embodiments.

In various embodiments of the present disclosure, it should be understood that the sequence numbers of the processes described below do not imply a sequence of execution sequences, and the execution order of the processes should be determined by its functions and internal logic, and should not constitute any limitation on the implementation processes of the embodiments of the present disclosure.

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In the embodiments of the present disclosure, the term "a plurality of" means two or more, and other quantifiers are similar.

The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

In the embodiments of the present disclosure, the handover includes real-time handover and conditional handover.

### Real-time Handover:

When the network side device decides to enable a user equipment (UE) to hand over from a current serving cell to another cell, the network side device sends a Radio Resource Control (RRC) reconfiguration message to the UE, wherein the Radio Resource Control (RRC) reconfiguration message carries the configuration information required by the UE to access the target cell. After receiving the RRC reconfiguration message sent by the network side device, the UE performs application of the configuration information of the target cell included in the reconfiguration message, performs a random access with a target cell side for synchronization, and feeds back an RRC reconfiguration complete message to the target cell side to indicate to the network side device that UE has successfully accessed the target cell.

### Conditional Handover

The network side device preconfigures a plurality of target cells for the UE, that is, sends the configuration information and the execution condition of the target cell to the UE in advance. After receiving the configuration information of the target cell, the UE does not perform the traditional handover or PSCell change or PSCell addition immediately, but stores the received configuration and performs measurement evaluation on the configured candidate cell until there is a cell satisfying the execution condition, and thereafter, the UE performs a corresponding handover or PSCell change or PSCell addition process according to the stored reconfiguration message corresponding to the cell, that is, completes downlink synchronization and triggers a random access procedure to access the target primary cell (PCell) or the primary secondary cell (PSCell), and feeds back a corresponding reconfiguration complete message to the network side device.

Embodiments of the present disclosure provide a candidate cell configuration method and apparatus, to resolve a problem that the terminal cannot preconfigured a candidate cell in an inter-DU scenario.

The method and the apparatus are based on the same application concept, and because the method and the apparatus solve a similar principle of a problem, the implementation of the apparatus and the method may refer to each other, and details are not described herein again.

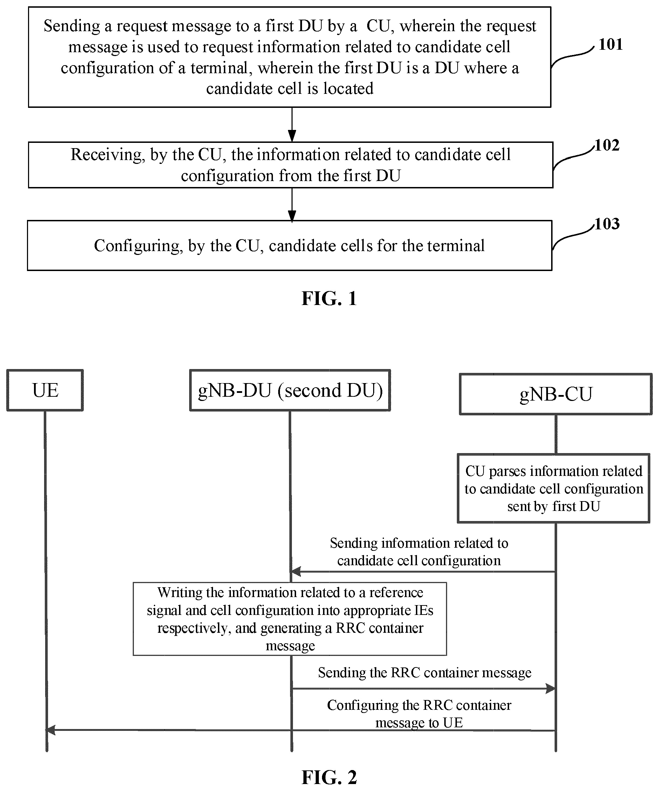

As shown in FIG. 1, an embodiment of the present disclosure provides a candidate cell configuration method, which is applied to a Central Unit (CU), and specifically includes the following steps:
Step 101: a centralized unit CU sends a request message to a first distribution unit DU, where the request message is used to request information related to candidate cell configuration of a terminal, where the first DU is a DU where the candidate cell is located.

In this embodiment, the CU is a CU of a network side device accessed by the terminal, and the CU may determine a candidate cell expected to be configured for the terminal, and send the request message to a first DU where the candidate cell is located, where the request message is used to request the first DU to configure related information of the candidate cell for the terminal.
Step 102: the CU receives information related to candidate cell configuration sent by the first DU;
Step 103: the CU configures a candidate cell for the terminal.

After the first DU configures the information related to the candidate cell for the terminal, the first DU sends the information related to candidate cell configuration to the CU. The CU sends the information related to candidate cell configuration to the terminal, and configures the candidate cell for the terminal. The candidate cell actually configured for the terminal by the CU is a candidate cell indicated by the information related to candidate cell configuration, that is, a candidate cell configured by the first DU. Optionally, the candidate cell configured for the terminal by the first DU may be completely the same as or different from a candidate cell requested by the CU.

The CU may be correspondingly connected to a plurality of DUs, where the first DU is connected to a same CU as a second DU where a serving cell currently accessed by the terminal is located, that is, in an embodiment of the present disclosure, the information related to candidate cell configuration may be used by the terminal to perform processing under an Inter-DU scenario (that is, among different DUs), for example, beam measurement, serving cell change, serving cell addition, and the like.

In an embodiment of the present disclosure, the CU sends a request message to the first DU where the candidate cell is located, to request the first DU to configure the related information of the candidate cell for the terminal, and after receiving the information related to candidate cell configuration sent by the first DU, the CU configures the candidate cell for the terminal, thereby implementing cross-DU candidate cell configuration.

Optionally, the request message includes at least one of the following:
1) identification information of the terminal;
2) a list of first candidate cells (Candidate cell list); and a first candidate cell indicated in the list of first candidate cells is a candidate cell which the CU requests (or suggests) the first DU to configure;
3) cell identification information of the first candidate cells (Cell ID); that is, a cell identifier of the first candidate cell that is requested to be obtained;
4) physical cell identifier (PCI) information of the first candidate cells; that is, the PCI of the first candidate cell requested to be obtained;
5) Cell Global Identifier (CGI) information of the first candidate cell; that is, the CGI of the first candidate cell requested to be obtained;
6) frequency information of the first candidate cells; that is, frequency information of the first candidate cells requested to be obtained;
7) indication information used to indicate that the request message is used for layer 1 or layer 2 mobility, where the indication information may be explicit or implicit indication information, and is used to indicate that the first request information is used for L1/L2 mobility;
8) information related to a reference signal, for example, a Synchronization Signal and PBCH Block (SSB), a Channel State Information Reference Signal (CSI-RS) related information, that is, the CU requests to obtain the information related to a reference signal of a candidate cell.

In an optional embodiment, the information related to candidate cell configuration includes at least one of the following:
1) identification information of the terminal;
2) a list of second candidate cells (Candidate cell list); wherein the second candidate cells indicated in the list of second candidate cells is a candidate cell actually configured by the first DU for the terminal, and the second candidate cell may be completely the same as, or partially same as, or different from the first candidate cell requested by the CU, which is not limited herein;
3) cell identification information (cell ID) of the second candidate cells; that is, the first DU configures the cell identifier of the second candidate cell for the terminal;
4) PCI information of the second candidate cells; that is, the first DU configures the PCI of the second candidate cell for the terminal;
5) CGI information of the second candidate cells; that is, the first DU configures the CGI of the second candidate cell for the terminal;
6) frequency information of the second candidate cells; that is, the first DU configures the frequency information of the second candidate cells for the terminal;
7) a list of third candidate cells; in this embodiment, the candidate cell indicated in the list of third candidate cells is a candidate cell that is not successfully established by the first DU in the first candidate cells requested by the CU; for example, the list of first candidate cells requested by the CU through the request message includes: a candidate cell 1, a candidate cell 2, and a candidate cell 3; the list of second candidate cells actually configured for the terminal by the first DU includes: a candidate cell 3 and a candidate cell 4, that is, the first DU deletes the candidate cell 1 and the candidate cell 2 requested by the CU, and newly adds a candidate cell 4, and the list of third candidate cells includes: a candidate cell 1 and a candidate cell 2, and indicates to the CU the candidate cell actually not configured by the first DU;
8) assistance information of the handover decision; the assistance information of the handover decision is used to assist the serving DU (the DU where the serving cell currently accessed by the terminal is located, that is, the second DU) in determining the time instant of performing L1/L2 handover, and the assistance information of the handover decision may include at least one of the following: an L1 measurement result threshold and an L3 measurement result;
9) information related to a reference signal; wherein the first DU configured for the terminal the related information of a reference signal of the second candidate cell, and the information related to a reference signal is, for example, a time domain position and a frequency domain position of signal transmission;
   optionally, the information related to a reference signal includes at least one of the following:
      a: SSB information of the second candidate cells; and the first DU may configure, for the terminal, related information of an SSB for a second candidate cell;
         optionally, the SSB information includes at least one of the following:
         additional PCI-r17 (additionalPCI-r17);
         periodicity-r17;
         SSB position parameters (ssb-PositionsInBurst-r17);
         SSB Synchronization Signal Block Parameter (ss-PBCH-BlockPower-r17);
      b: Transmission Configuration Indicator (TCI) information of the second candidate cells; and the first DU may configure related information of the TCI of the second candidate cell for the terminal;
      c: information related to Layer 1 CSI-RS of the second candidate cells; and the first DU may configure information related to the L1 CSI-RS of the second candidate cell for the terminal;
   optionally, the information related to CSI-RS may include at least one of the following:
      a non-zero power CSI-RS resource identifier (Non-Zero Power CSI-RS Resource ID,
      nzp-CSI-RS-Resource ID);
      resource Mapping;
      power Control Offset;
      power Control Offset SS;
      scrambling identifier (scrambling ID);
      periodicity and Offset;
      Quasi Co-Location (QCL) Information Period CSI-RS (QCL-InfoPeriodicCSI-RS);
10) cell configuration information;
optionally, the cell configuration information includes at least one of the following:
a: Layer 2 configuration information of the second candidate cells; and the first DU may configure L2 configuration information of the second candidate cells for the terminal;
b: Layer 3 configuration information of the second candidate cells; and the first DU may configure L3 configuration information of the second candidate cells for the terminal;
c: resource information reserved for the physical layer of the second candidate cell, where the resource information is, for example, a preconfigured PUCCH or PUSCH for the UE to send information or indication information, a preconfigured SR resource (for the UE to send the SR), and a preconfigured uplink grant (UL grant) configuration; the pre-configured UL grant may be a type 1 or a type 2 UL grant used by the UE to send uplink information, and the configuration may include a frequency domain resource UL-grant and a corresponding time domain resource, for example, a number of configured processes (numberOfConfUL-Processes), an uplink scheduling interval (ul-SchedInterval), an uplink start subframe (ul-StartSubframe), and the like;
d: indication information used to indicate that the cell configuration information is used for layer 1 or layer 2 mobility, where the indication information is used to indicate that the cell configuration information is used for L1 or L2 mobility, and the indication information may be explicit indication information or implicit indication information.

In this embodiment, when the CU requests the candidate cell to the candidate DU (that is, the first DU), one or more candidate cells may be requested, and when the plurality of candidate cells are requested, information such as a candidate cell list and an identifier of each of the one or more candidate cells may be carried in the first interface message (for example, the F1 interface message). Correspondingly, when the first DU feeds back the configuration information of the candidate cells, the configuration information of the one or more candidate cells may also be fed back according to the request of CU.

Optionally, the first candidate cells requested in the request message are at least partially the same as or different from the second candidate cells configured in the information related to candidate cell configuration.

In this embodiment, the first candidate cell requested by the CU through the request message is the candidate cell which the CU expects the first DU to configure for the terminal. When the first DU configures the candidate cell, the first DU may complete adopt the list provided by CU, or perform one or more following operations according to the list provided by the CU (that is, the candidate cell requested in the request message sent by the CU): modifying the candidate cell, increase the candidate cell, and delete the candidate cell. Therefore, the second candidate cell configured by the first DU may be completely the same as, partially same as, or completely different from the first candidate cell requested by the CU.

In an optional embodiment, the sending a request message to the first distribution unit DU includes one of the following:
sending the request message to the first DU by extending a first interface message;
sending the request message to the first DU by reusing a first interface message;
sending the request message to the first DU by newly creating a first interface message..

In this embodiment, when the CU sends the request message to the first DU, a sending manner that may be used includes: expanding, reusing, or newly establishing a first interface message. For example, the original first interface message is extended, for example, a UE context setup request (UE CONTEXT SETUP REQUEST) and a UE context modification request (UE CONTEXT MODIFICATION REQUEST).

The first interface is a communication interface between the CU and the DU, the first interface may be an F1 interface, and the CU may perform information interaction with the first DU and/or the second DU through the F1 interface.

In an optional embodiment, the configuring a candidate cell for the terminal includes: sending the information related to candidate cell configuration to a second DU through a first interface, so that the second DU forwards the information related to the candidate cell configuration to the terminal, wherein the second DU is a DU where a serving cell currently accessed by the terminal is located.

In this embodiment, when configuring the candidate cell for the terminal, the CU needs to transmit the information related to candidate cell configuration through the second DU where the serving cell currently accessed by the terminal is located. The CU sends the information related to candidate cell configuration to the second DU, and the second DU forwards the information related to candidate cell configuration to the terminal, to implement cross-DU candidate cell configuration.

Optionally, the sending the information related to candidate cell configuration to the second DU through the first interface includes one of the following:
sending the information related to candidate cell configuration to the second DU by extending a first interface message;
sending the information related to candidate cell configuration to the second DU by reusing a first interface message;
sending the information related to candidate cell configuration to the second DU by newly creating a first interface message.

The first interface is a communication interface between the CU and the DU, the first interface may be an F1 interface, and the CU may send the information related to candidate cell configuration to the second DU through the F1 interface.

Specifically, when the CU sends the information related to candidate cell configuration to the second DU, a sending manner that may be used includes: expanding, reusing, or newly establishing a first interface message. For example, a related F1 interface message, for example, a downlink RRC message transfer (DL RRC MESSAGE TRANSFER), is reused; or a new F1 interface message is established for sending the information related to candidate cell configuration.

In an optional embodiment, the configuring the candidate cells for the terminal includes: configuring a candidate cell for the terminal through a radio resource control RRC message.

In this embodiment, the CU may configure the candidate cell for the terminal through an RRC message. Optionally, the CU may send an RRC message carrying the information related to candidate cell configuration to a second DU where the candidate cell currently accessed by the terminal is located, and the second DU forwards the RRC message to the terminal.

In an optional embodiment, the configuring, by using a radio resource control RRC message, the candidate cell for the terminal includes:
manner 1: writing the information related to candidate cell configuration into the RRC message, wherein the RRC message is transparently transmitted through the second DU; or,
manner 2: sending the information related to candidate cell configuration to the second DU through a first interface; receiving an information element IE from the second DU, wherein the IE includes the information related to candidate cell configuration written by the second DU; writing the IE into the RRC message, wherein the RRC message is transparently transmitted through the second DU; wherein the second DU is a DU where a serving cell currently accessed by the terminal is located

In the foregoing manner 1, the RRC message is directly generated by the CU, and the CU writes the information related to candidate cell configuration into the RRC message by modifying an RRC message, and forwards the RRC message to the terminal through a second DU currently accessed by the terminal.

In the foregoing manner 2, the RRC message is generated after the CU interacts with the second DU. The CU sends the information related to candidate cell configuration to a second DU currently accessed by the terminal, and the second DU writes the information related to candidate cell configuration into the IE ; the second DU feeds back the IE written with the information related to candidate cell configuration to the CU; and the CU writes the IE into an RRC message to generate a new RRC message, and transmits the new RRC message to the terminal through the second DU transparently, that is, the RRC message is forwarded to the terminal through the RRC message transparently.

In this embodiment, the information related to candidate cell configuration sent by the first DU may include information related to a reference signal (CSI-RS, SSB, TCI, etc.) and configuration information of some candidate cells. The information related to a reference signal needs to be parsed immediately after the UE needs to receive the information related to candidate cell configuration, and the measurement of the candidate cell is enabled. In addition, when the configuration information of the candidate cell itself may be parsed by the UE until the change and/or addition of the serving cell are triggered. Therefore, it may be considered that the measurement related information (for example, the information related to a reference signal) and the configuration information of the candidate cell itself are respectively sent to the UE.

In the manner 1, if the CU may modify the RRC message of the second DU where the serving cell is located, then the CU parses the information related to candidate cell configuration sent by the first DU, the CU modifies the DU to CU RRC information IE sent by the second DU where the serving cell is located, writes the information related to a reference signal and the cell configuration information into the appropriate IE in the DU to CU RRC Information IE and configures the information related to a reference signal and the cell configuration information to the UE through the DL RRC MESSAGE TRANSFER.

In the foregoing manner 2, the CU cannot modify the RRC message of the second DU where the serving cell currently accessed by the terminal is located, as shown in FIG. 2: The CU parses the information related to candidate cell configuration sent by the first DU, and sends through the F1 interface message the information related to candidate cell configuration (the information related to a reference signal and the configuration information of the candidate cell) to the second DU where the current serving cell is located, where the F1 interface message may be an extended current F1 interface message (for example, a UE CONTEXT MODIFICATION REQUEST), or a new F1 interface message may be defined.

After the second DU receives the information related to candidate cell configuration, the information related to a reference signal and the cell configuration are respectively put into a proper IE to generate an RRC container message, for example, the information related to a reference signal may generate servingcellconfig in the cellgroupconfig, which is placed in the DU to CU RRC Information IE, and the RRC container message is sent to the CU through the F1 interface, and the F1 interface message may be an extended current F1 interface message (for example, UE CONTEXT MODIFICATION RESPONSE, UE CONTEXT MODIFICATION REQUIRED), or may a newly defined F1 interface message, and the CU sends the RRC container message to the terminal.

Optionally, to facilitate the immediate application configuration, the information related to a reference signal of the candidate cell may be included in the serving cell configuration (servingcellconfig) of the cell group configuration (CellGroupConfig) of the DU to CU RRC Information IE between the CU and the DU.

An implementation process of the candidate cell configuration method is described below through specific embodiments.

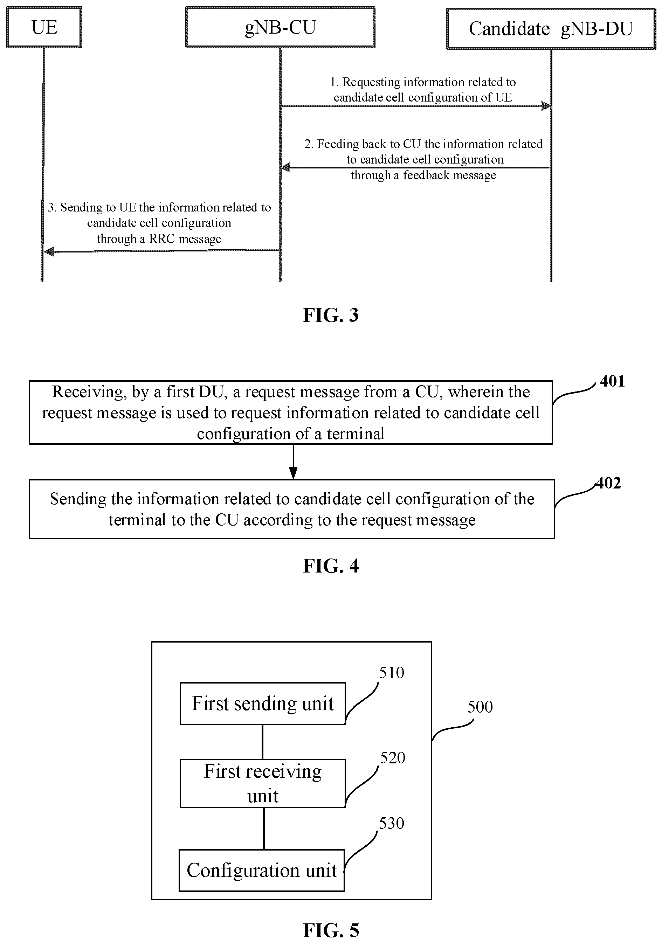

As shown in FIG. 3, the method includes following steps.

Step 1: a CU requests configuration information of a candidate cell of a UE from a candidate DU (a DU where a candidate cell is located, that is, the first DU), wherein the candidate cell may be one or more candidate cells. The request message sent by the CU may an extended associated F1 interface message, for example, a UE CONTEXT SETUP REQUEST, A UE CONTEXT MODIFICATION REQUEST, or the like, or a newly established F1 interface message. the request message includes at least one or more of the following:
information such as a UE identifier;
a requested Candidate cell list;
Cell ID for Candidate cell;
PCI information for a candidate cell;
CGI information for the candidate cell;
frequency information for a candidate cell;
explicit or implicit indication information, configured to indicate that the request information is used for L1/L2 mobility; and
SSB information.

Step 2: After receiving the request sent by the CU, the candidate DU feeds back information related to the configuration of the candidate cell to the CU through a feedback message, where the number of the candidate cell may be one or more. The feedback message may an extended associated F1 interface message, for example, a UE CONTEXT SETUPRESPONSE, a UE CONTEXT MODIFICATION RESPONSE; or a newly established F1 interface message, where the information related to the configuration of the candidate cell includes at least one of the following information:
UE identifier and other Information;
Candidate cell list;
cell ID for Candidate cell;
PCI information for a candidate cell;
CGI information for the candidate cell;
frequency information for a candidate cell;
information related to L1 CSI-RS of a candidate cell;
SSB information for a candidate cell;
L2 configuration information for the candidate cell;
L3 configuration information for the candidate cell;
TCI information for a candidate cell;
resource information reserved for a physical layer of a candidate cell;
explicit or implicit indication information indicating that the information is used for L 1/L 2 mobility.

It should be noted that the candidate cell indicated in the information related to configuration of the candidate cell fed back by the candidate DU may be completely the same as, or partially the same, or different from the candidate cell indicated in the request message sent by the CU, that is, the candidate DU may perform one or more of modification, addition, and deletion of the candidate cells indicated by the request message.

Step 3: the CU sends the information related to configuration of the candidate cell to the UE through an RRC message. The RRC message may a reused associated F1 interface message, for example, a DL RRC MESSAGE TRANSFER; or a newly established F1 interface message for sending the information related to the candidate cell configuration.

The RRC message may be directly generated by the CU itself, or may be generated after the CU interacts with the second DU where the serving cell currently accessed by the terminal is located.

In an embodiment of the present disclosure, the CU sends a request message to the first DU where the candidate cell is located, to request the first DU to configure the information related to the candidate cell for the terminal, and after receiving the information related to candidate cell configuration sent by the first DU, the CU configures the information related to candidate cell configuration to the terminal, thereby implementing cross-DU candidate cell configuration.

As shown in FIG. 4, an embodiment of the present disclosure further provides a candidate cell configuration method, applied to a first DU, where the first DU is a DU where a candidate cell is located, and the method includes following steps.
Step 401: a first DU receives a request message sent by a CU, where the request message is used to request information related to candidate cell configuration of a terminal;
Step 402: the first DU sends the information related to candidate cell configuration of the terminal to the CU according to the request message.

In this embodiment, the CU is a CU of a network side device accessed by the terminal, and the CU may determine a candidate cell expected to be configured for the terminal, and send the request message to a first DU where the candidate cell is located, where the request message is used to request the first DU to configure information related to the candidate cell for the terminal.

After receiving the request message, the first DU may configure the candidate cell for the terminal according to the request message, where the first DU may perform configuration for the terminal completely according to the candidate cells requested by the request message, or may modify, add, or delete the candidate cells requested by the request message. After the first DU configures the information related to the candidate cell configuration for the terminal, the first DU sends the information related to candidate cell configuration to the CU, and the CU sends the information related to candidate cell configuration to the terminal, and configures the candidate cells for the terminal.

It should be noted that the first DU is different from the DU where the serving cell currently accessed by the terminal is located, and the DU where the serving cell currently accessed by the terminal is located is denoted as the second DU.

In the embodiments of the present disclosure, after the DU where the candidate cell is located receives the request message sent by the CU, the DU configures the information related to candidate cell configuration to the terminal, and sends the information related to the candidate cell configuration to the CU, and the CU configures the information related to candidate cell configuration to the terminal, thereby implementing cross-DU candidate cell configuration.

Optionally, the request message includes at least one of the following:
1) identification information of the terminal;
2) a list of first candidate cells (Candidate cell list);
3) cell identification information (cell ID) of the first candidate cells;
4) physical cell identifier (PCI) information of the first candidate cells;
5) cell global identifier (CGI) information of the first candidate cells;
6) frequency information of the first candidate cells;
7) indication information used to indicate that the request message is used for layer 1 or layer 2 mobility; the indication information may be explicit or implicit indication information used to indicate that the first request message is used for L1/L2 mobility;
8) information related to a reference signal; for example, information related to SSB or CSI-RS; that is, the CU requests to obtain information related to the reference signal of the candidate cells.

In an optional embodiment, the information related to candidate cell configuration includes at least one of the following:
1) identification information of the terminal;
2) a list of second candidate cells, the second candidate cells indicated in the list of second candidate cells are candidate cells actually configured by the first DU for the terminal, and the second candidate cell may be completely the same as, or partially same, or different from the first candidate cells requested by the CU, which is not limited herein;
3) cell ID of the second candidate cells;
4) PCI information of the second candidate cells;
5) CGI information of the second candidate cells;
6) frequency information of the second candidate cells;
7) a list of third candidate cells; in this embodiment, the candidate cell indicated in the list of third candidate cells is a candidate cell that is not successfully established by the first DU in the first candidate cells requested by the CU;
8) assistance information of the handover decision; the assistance information of the handover decision is used to assist the service DU (the DU where the serving cell currently accessed by the terminal is located, that is, the second DU) in determine the time instant of performing L1/L2 handover, and the assistance information of the handover decision may include at least one of the following: an L1 measurement result threshold and an L3 measurement result;
9) information related to a reference signal; and the first DU configures for the terminal the information related to a reference signal of the second candidate cell, and the information related to a reference signal is, for example, a time domain position and a frequency domain position of signal transmission.

Optionally, the information related to a reference signal includes at least one of the following:
a: SSB information of the second candidate cells;
   optionally, the SSB information includes at least one of the following:
   additionalPCI-r17;
   periodicity-r17;
   ssb-PositionsInBurst-r17;
   ss-PBCH-BlockPower-r17;
b: TCI information of the second candidate cells;
c: information related to Layer 1 CSI-RS of the second candidate cells;
   optionally, the information related to CSI-RS may include at least one of the following:
      nzp-CSI-RS-Resource ID;
      resource Mapping;
      power Control Offset;
      power Control Offset SS;
      scrambling ID;
      periodicity And Offset;
      QCL-InfoPeriodicCSI-RS);
   10) cell configuration information;
   optionally, the cell configuration information includes at least one of the following:
      a: Layer 2 configuration information of the second candidate cells;
      b: Layer 3 configuration information of the second candidate cells;
      c: resource information reserved for the physical layer of the second candidate cell, where the resource information is, for example, a preconfigured PUCCH or PUSCH for the UE to send information or indication information, a preconfigured SR resource (for the UE to send the SR), and a preconfigured uplink grant (UL grant) configuration; the pre-configured UL grant may be a type 1 or a type 2 UL grant used by the UE to send uplink information, and the configuration may include a frequency domain resource UL-grant and a corresponding time domain resource, for example, numberOfConfUL-Processes, ul-SchedInterval, ul-StartSubframe, and the like;
d: indication information used to indicate that the cell configuration information is used for layer 1 or layer 2 mobility, where the indication information is used to indicate that the cell configuration information is used for L1 or L2 mobility, and the indication information may be explicit indication information or implicit indication information.

Optionally, the first candidate cells requested in the request message are at least partially the same as or different from the second candidate cells configured in the information related to candidate cell configuration.

In this embodiment, the first candidate cell requested by the CU through the request message is the candidate cell which the CU expects the first DU to configure for the terminal. When the first DU configures the candidate cell, the first DU may complete adopt the list provided by CU, or perform one or more following operations according to the list provided by the CU: modifying the candidate cell, increase the candidate cell, and delete the candidate cell. Therefore, the second candidate cell configured by the first DU may be completely the same as, partially same as, or completely different from the first candidate cell requested by the CU.

In an optional embodiment, the sending the information related to candidate cell configuration of the terminal to the CU includes one of the following:
sending the information related to candidate cell configuration to the CU by extending a first interface message;
sending the information related to candidate cell configuration to the CU by reusing a first interface message;
sending the information related to candidate cell configuration to the CU by newly creating a first interface message.

In this embodiment, when the first DU sends the information related to candidate cell configuration to the CU, a sending manner that may be used includes: expanding, reusing, or newly establishing a first interface message. For example, extending the related first interface message, such as, UE CONTEXT SETUP RESPONSE, UE CONTEXT SETUP RESPONSE.

The first interface is a communication interface between the CU and the DU, the first interface may be an F1 interface, and the first DU may perform information interaction with the CU through the F1 interface.

In an optional embodiment, a form of the information related to candidate cell configuration in the first interface message includes one of the following:
1) being the information element IE explicitly included in the first interface message; that is, the information related to candidate cell configuration is directly included in the first interface message in the form of an IE;
2) being implicitly included in an IE sent by the first DU to the CU.

In this embodiment, the first DU may enable the information related to candidate cell configuration to be included in an IE in an implicit manner, and the IE may be newly defined, or may be obtained by extending an existing IE, for example, an extended DU to CU RRC information, a cellgroupconfig, or the like. For example, the information related to candidate cell configuration is included a cell group configuration (CellGroupConfig) in DU to CU RRC Information in a UE Context Setup Response message.

In the embodiments of the present disclosure, after the DU where the candidate cell is located receives the request message sent by the CU, the DU configures the information related to candidate cell configuration for the terminal, and sends the information related to candidate cell configuration to the CU, and the CU configures the information related to candidate cell configuration to the terminal, thereby implementing cross-DU candidate cell configuration.

The foregoing embodiments describe the candidate cell configuration methods of the present disclosure, and the following will further describe the apparatuses corresponding to the method with reference to the accompanying drawings.

Specifically, as shown in FIG. 5, an embodiment of the present disclosure provides a candidate cell configuration apparatus 500 applied to a CU, including:
a first sending unit 510, configured to send a request message to a first distribution unit DU, where the request message is used to request information related to candidate cell configuration of a terminal, where the first DU is a DU where the candidate cell is located;
a first receiving unit 520, configured to receive information related to candidate cell configuration sent by the first DU;
a configuration unit 530, configured to configure a candidate cell for the terminal.

Optionally, the request message includes at least one of the following:
identification information of the terminal;
a list of first candidate cells;
cell identification information of the first candidate cells;
physical cell identifier (PCI) information of the first candidate cells;
Cell Global Identifier (CGI) information of the first candidate cell;
frequency information of the first candidate cells;
indication information used to indicate that the request message is used for layer 1 or layer 2 mobility;
information related to a reference signal.

Optionally, the information related to candidate cell configuration includes at least one of the following:
identification information of the terminal;
a list of second candidate cells;
cell identification information of the second candidate cells;
PCI information of the second candidate cells;
CGI information of the second candidate cells;
frequency information of the second candidate cells;
a list of third candidate cells;
assistance information of the handover decision;
information related to a reference signal;
cell configuration information.

Optionally, the information related to a reference signal includes at least one of the following:
SSB information of the second candidate cells;
TCI information of the second candidate cells;
information related to Layer 1 CSI-RS of the second candidate cells.

Optionally, the cell configuration information includes at least one of the following:
Layer 2 configuration information of the second candidate cells;
Layer 3 configuration information of the second candidate cells;
resource information reserved for the physical layer of the second candidate cell;
indication information used to indicate that the cell configuration information is used for layer 1 or layer 2 mobility.

Optionally, the first candidate cells requested in the request message are at least partially the same as or different from the second candidate cells configured in the information related to candidate cell configuration.

Optionally, the first sending unit is configured to perform one of the following:
sending the request message to the first DU by extending a first interface message;
sending the request message to the first DU by reusing a first interface message;
sending the request message to the first DU by newly creating a first interface message.

Optionally, the configuration unit includes a sending subunit, configured to send the information related to candidate cell configuration to a second DU through a first interface, so that the second DU forwards the information related to the candidate cell configuration to the terminal, wherein the second DU is a DU where a serving cell currently accessed by the terminal is located.

Optionally, the sending subunit is specifically configured to perform one of the following:
sending the information related to candidate cell configuration to the second DU by extending a first interface message;
sending the information related to candidate cell configuration to the second DU by reusing a first interface message;
sending the information related to candidate cell configuration to the second DU by newly creating a first interface message.

Optionally, the configuration unit is specifically configured to: configure a candidate cell for the terminal through a radio resource control RRC message.

Optionally, the configuration unit is specifically configured to: write the information related to candidate cell configuration into the RRC message, wherein the RRC message is transparently transmitted through the second DU; or, send the information related to candidate cell configuration to the second DU through a first interface; receive an information element IE from the second DU, wherein the IE includes the information related to candidate cell configuration written by the second DU; write the IE into the RRC message, wherein the RRC message is transparently transmitted through the second DU; wherein the second DU is a DU where a serving cell currently accessed by the terminal is located.

It should be noted that, the foregoing apparatus provided in the embodiments of the present disclosure can implement all method steps implemented by the foregoing method embodiments applied to a CU, and can achieve the same technical effect, and details of the same parts and beneficial effects as those in the method embodiments in this embodiment are not described herein again.

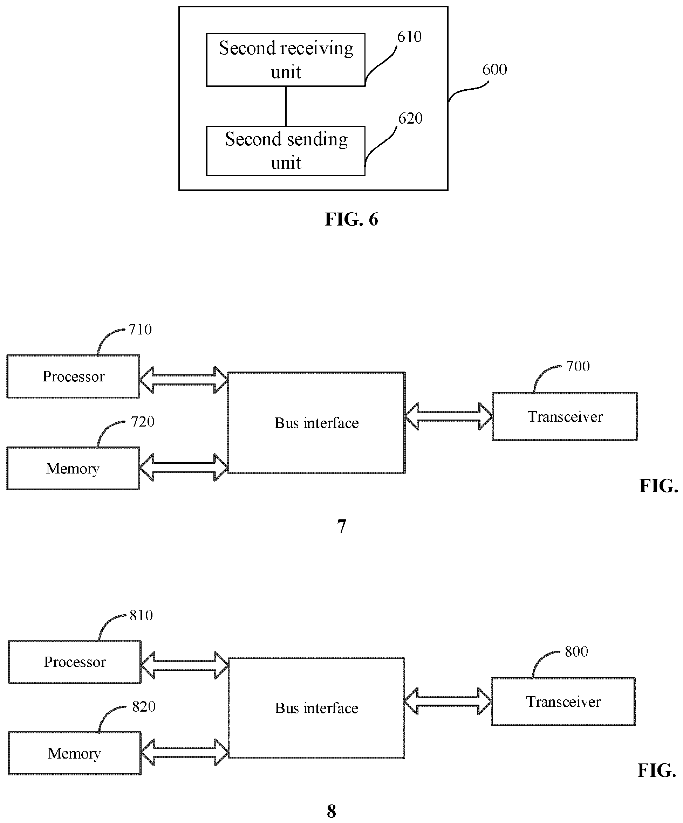

Specifically, as shown in FIG. 6, an embodiment of the present disclosure provides a candidate cell configuration apparatus 600 applied to a first DU, and the apparatus includes: a second receiving unit 610, configured to receive a request message sent by a CU, where the request message is used to request information related to candidate cell configuration of a terminal; and a second sending unit 620, configured to send the information related to candidate cell configuration of the terminal to the CU according to the request message.

Optionally, the request message includes at least one of the following:
the request message includes at least one of the following:
identification information of the terminal;
a list of first candidate cells;
cell identification information of the first candidate cells;
PCI information of the first candidate cells;
CGI information of the first candidate cells;
frequency information of the first candidate cells;
indication information used to indicate that the request message is used for layer 1 or layer 2 mobility;
information related to a reference signal.

Optionally, the information related to candidate cell configuration includes at least one of the following:
identification information of the terminal;
a list of second candidate cells;
cell ID information of the second candidate cells;
PCI information of the second candidate cells;
CGI information of the second candidate cells;
frequency information of the second candidate cells;
a list of third candidate cells;
assistance information of the handover decision;
information related to a reference signal;
cell configuration information.

Optionally, the information related to a reference signal includes at least one of the following:
SSB information of the second candidate cells;
TCI information of the second candidate cells;
information related to Layer 1 CSI-RS of the second candidate cells.

Optionally, the cell configuration information includes at least one of the following:
Layer 2 configuration information of the second candidate cells;
Layer 3 configuration information of the second candidate cells;
resource information reserved for the physical layer of the second candidate cell;
indication information used to indicate that the cell configuration information is used for layer 1 or layer 2 mobility.

Optionally, the first candidate cells requested in the request message are at least partially the same as or different from the second candidate cells configured in the information related to candidate cell configuration.

Optionally, the second sending unit is specifically configured to perform one of the following:
sending the information related to candidate cell configuration to the CU by extending a first interface message;
sending the information related to candidate cell configuration to the CU by reusing a first interface message;
sending the information related to candidate cell configuration to the CU by newly creating a first interface message.

Optionally, a form of the information related to candidate cell configuration in the first interface message includes one of the following:
being the information element IE explicitly included in the first interface message;
being implicitly included in an IE sent by the first DU to the CU.

It should be noted that, the foregoing apparatus provided in the embodiments of the present disclosure can implement all method steps implemented by the foregoing method embodiments applied to the first DU, and can achieve the same technical effect, and details of the same parts and beneficial effects as those in the method embodiments in this embodiment are not described herein again.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solution of the present disclosure essentially or all or part of the technical solution that contributes to the prior art may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disk.

As shown in FIG. 7, an embodiment of the present disclosure further provides a candidate cell configuration apparatus, applied to a CU, and the apparatus includes: a memory 720, a transceiver 700, and a processor 710, wherein the memory 720 is configured to store a computer program; the transceiver 700 is configured to receive and send data under the control of the processor 710; and the processor 710 is configured to read the computer program in the memory.

The transceiver 700 is configured to send a request message to a first distribution unit DU, where the request message is used to request information related to candidate cell configuration of a terminal, where the first DU is a DU where the candidate cell is located; receive information related to candidate cell configuration sent by the first DU;

The processor 710 is configured to read a computer program in the memory and perform the following operations: configuring a candidate cell for the terminal.

Optionally, the request message includes at least one of the following:
identification information of the terminal;
a list of first candidate cells;
cell identification information of the first candidate cells;
PCI information of the first candidate cells;
CGI information of the first candidate cells;
frequency information of the first candidate cells;
indication information used to indicate that the request message is used for layer 1 or layer 2 mobility;
information related to a reference signal.

Optionally, the information related to candidate cell configuration includes at least one of the following:
identification information of the terminal;
a list of second candidate cells;
cell identification information of the second candidate cells;
PCI information of the second candidate cells;
CGI information of the second candidate cells;
frequency information of the second candidate cells;
a list of third candidate cells;
assistance information of the handover decision;
information related to a reference signal;
cell configuration information.

Optionally, the information related to a reference signal includes at least one of the following:
SSB information of the second candidate cells;
TCI information of the second candidate cells;
information related to Layer 1 CSI-RS of the second candidate cells.

Optionally, the cell configuration information includes at least one of the following:
Layer 2 configuration information of the second candidate cells;
Layer 3 configuration information of the second candidate cells;
resource information reserved for the physical layer of the second candidate cell;
indication information used to indicate that the cell configuration information is used for layer 1 or layer 2 mobility.

Optionally, the first candidate cells requested in the request message are at least partially the same as or different from the second candidate cells configured in the information related to candidate cell configuration.

Optionally, the transceiver is specifically configured to perform one of the following:
sending the request message to the first DU by extending a first interface message;
sending the request message to the first DU by reusing a first interface message;
sending the request message to the first DU by newly creating a first interface message.

Optionally, the processor is configured to read the computer program in the memory and perform the following operations:
sending the information related to candidate cell configuration to a second DU through a first interface, so that the second DU forwards the information related to the candidate cell configuration to the terminal, wherein the second DU is a DU where a serving cell currently accessed by the terminal is located.

Optionally, the processor is configured to read a computer program in the memory and perform one of the following operations:
sending the information related to candidate cell configuration to the second DU by extending a first interface message;
sending the information related to candidate cell configuration to the second DU by reusing a first interface message;
sending the information related to candidate cell configuration to the second DU by newly creating a first interface message.

Optionally, the processor is configured to read a computer program in the memory and perform the following operations: configuring a candidate cell for the terminal through a radio resource control RRC message.

Optionally, the processor is configured to read a computer program in the memory and perform the following operations:
writing the information related to candidate cell configuration into the RRC message, wherein the RRC message is transparently transmitted through the second DU; or,
sending the information related to candidate cell configuration to the second DU through a first interface; receiving an information element IE from the second DU, wherein the IE includes the information related to candidate cell configuration written by the second DU; writing the IE into the RRC message, wherein the RRC message is transparently transmitted through the second DU; wherein the second DU is a DU where a serving cell currently accessed by the terminal is located.

In FIG. 7, the bus architecture may include any number of interconnected buses and bridges, and specifically, various circuits of one or more processors represented by the processor 710 and a memory represented by the memory 720 are linked together. The bus architecture may also link various other circuits, such as a peripheral device, a voltage regulator, and a power management circuit, which are well known in the art, and therefore are not further described herein. The bus interface provides an interface. The transceiver 700 may be a plurality of elements, that is, includes a transmitter and a transceiver, and provides units for communicating with various other apparatuses on a transmission medium. The processor 710 is responsible for managing the bus architecture and general processing, and the memory 720 may store data used by the processor 710 when performing operations.

The processor 710 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

It should be noted that, the foregoing apparatus provided in the embodiments of the present disclosure can implement all method steps implemented by the foregoing method embodiments applied to a CU, and can achieve the same technical effect, and details of the same parts and beneficial effects as those in the method embodiments in this embodiment are not described herein again.

As shown in FIG. 8, an embodiment of the present disclosure further provides a candidate cell configuration apparatus, applied to a first DU, the apparatus includes: a memory 820, a transceiver 800, and a processor 810, wherein the memory 820 is configured to store a computer program; the transceiver 800 is configured to receive and send data under the control of the processor 810; and the processor 810 is configured to read a computer program in the memory.

The transceiver 800 is configured to receive a request message sent by a CU, where the request message is used to request information related to candidate cell configuration of a terminal; the processor 810 is configured to read a computer program in the memory and perform the following operations:
sending the information related to candidate cell configuration of the terminal to the CU according to the request message..

Optionally, the request message includes at least one of the following:
identification information of the terminal;
a list of first candidate cells;
cell identification information of the first candidate cells;
PCI information of the first candidate cells;
CGI information of the first candidate cells;
frequency information of the first candidate cells;
indication information used to indicate that the request message is used for layer 1 or layer 2 mobility;
information related to a reference signal.

Optionally, the information related to candidate cell configuration includes at least one of the following:
identification information of the terminal;
a list of second candidate cells;
cell ID information of the second candidate cells;
PCI information of the second candidate cells;
CGI information of the second candidate cells;
frequency information of the second candidate cells;
a list of third candidate cells;
assistance information of the handover decision;
information related to a reference signal;
cell configuration information.

Optionally, the information related to a reference signal includes at least one of the following:
SSB information of the second candidate cells;
TCI information of the second candidate cells;
information related to Layer 1 CSI-RS of the second candidate cells.

Optionally, the cell configuration information includes at least one of the following:
layer 2 configuration information of the second candidate cells;
layer 3 configuration information of the second candidate cells;
resource information reserved for the physical layer of the second candidate cell;
indication information used to indicate that the cell configuration information is used for layer 1 or layer 2 mobility.

Optionally, the first candidate cells requested in the request message are at least partially the same as or different from the second candidate cells configured in the information related to candidate cell configuration.

Optionally, the processor is configured to read a computer program in the memory and perform one of the following operations:
sending the information related to candidate cell configuration to the CU by extending a first interface message;
sending the information related to candidate cell configuration to the CU by reusing a first interface message;
sending the information related to candidate cell configuration to the CU by newly creating a first interface message..

Optionally, a form of the information related to candidate cell configuration in the first interface message includes one of the following:
being the information element IE explicitly included in the first interface message;
being implicitly included in an IE sent by the first DU to the CU.

In FIG. 8, the bus architecture may include any number of interconnected buses and bridges, and specifically, various circuits of one or more processors represented by the processor 810 and a memory represented by the memory 820 are linked together. The bus architecture may also link various other circuits, such as a peripheral device, a voltage regulator, and a power management circuit, which are well known in the art, and therefore are not further described herein. The bus interface provides an interface. The transceiver 800 may be a plurality of elements, that is, includes a transmitter and a transceiver, and provides units for communicating with various other apparatuses on a transmission medium. The processor 810 is responsible for managing the bus architecture and general processing, and the memory 820 May store data used by the processor 810 when performing operations.

The processor 810 May be a central processing unit (CPU), an Application Specific Integrated Circuit (ASIC), a Field-Programmable Gate Array (FPGA), or a Complex Programmable Logic Device (CPLD), and the processor may also use a multi-core architecture.

It should be noted that, the foregoing apparatus provided in the embodiments of the present disclosure can implement all method steps implemented by the foregoing method embodiments applied to the first DU, and can achieve the same technical effect, and details of the same parts and beneficial effects as those in the method embodiments in this embodiment are not described herein again.

In addition, an embodiment of the present disclosure further provides a processor-readable storage medium, on which a computer program is stored, wherein when the program is executed by a processor, the steps of the candidate cell configuration method are implemented, and the same technical effect can be achieved. The readable storage medium may be any usable medium or data storage device accessible by a processor, including but not limited to a magnetic memory (for example, a floppy disk, a hard disk, a magnetic tape, a magneto-optical disk (DVD), a Blu-ray disk (BD), a high-definition versatile disk (DVD), a Blu-ray disk (Blu-ray Disk, BD), a High-Definition Versatile Disk (EPROM), an Electrically Erasable Programmable Read Only Memory (EEPROM), a non-volatile memory (NAND Flash), a Solid State Disk (SSD)), and the like.

It should be noted that the technical solutions provided in the embodiments of the present disclosure may be applicable to various systems, especially 5G systems. For example, the applicable system may be a Global System of Mobile Communication (GSM) system, a Code Division Multiple Access (CDMA) system, a Wideband Code Division Multiple Access (WCDMA) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), a Worldwide Interoperability for Microwave Access (New Radio, NR) system, and the like. The plurality of systems each include a terminal device and a network device. The system may further include a core network part, for example, an Evolved Packet System (EPS), a 5G system (5 GS), and the like.

A network device, for example, a CU and a DU, in the embodiments of the present disclosure may be a CU and a DU of a base station, and the base station may include a plurality of cells that provide a service for the terminal. Depending on the specific application scenario, the base station may also be referred to as an access point, or may be a device in the access network that communicates with the wireless terminal device through one or more sectors on the air interface, or another name. The network device may be configured to replace the received over-the-air frame with an Internet Protocol (IP) packet as a router between the wireless terminal device and the rest of the access network, where the rest of the access network may include an Internet Protocol (IP) communication network. The network device may also coordinate attribute management of the air interface. For example, the network device in the embodiments of the present disclosure may be a Base Transceiver Station (BTS) in a Global System for Mobile Communications (GSM) or a Code Division Multiple Access (CDMA), or may be a Network Device (NodeB) in a Wide-Band Code Division Multiple Access (WCDMA), or may be a 5G base station (gNB), or may be a Home Evolved Node B (HeNB), a relay node, a Femto, a Pico base station (Pico), or the like in a Long Term Evolution (LTE) system. In some network structures, the network device may include a centralized unit (CU) node and a distributed unit (DU) node, and the centralized unit and the distribution unit may also be geographically separated.

The network device and the terminal device may each perform multi-input multi-output (MIMO) transmission by using one or more antennas, and the MIMO transmission may be single user MIMO (SU-MIMO) or multi-user MIMO (multiple user MIMO, MU-MIMO). According to the form and quantity of the root antenna combination, the MIMO transmission may be 2D-MIMO, 3D-MIMO, FD-MIMO or massive-MIMO, or may be diversity transmission, precoding transmission, beamforming transmission, or the like.

A person skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may use a form of a computer program product implemented on one or more computer-usable storage media (including but not limited to a disk memory, an optical memory, and the like) including computer-usable program codes.

The present disclosure is described with reference to the flowcharts and/or block diagrams of the method, the device (system), and the computer program product according to the embodiments of the present disclosure. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general purpose computer, special purpose computer, embedded processor, or other programmable data processing apparatus to produce a machine, such that the instructions executed by the processor of the computer or other programmable data processing apparatus generate means for implementing the functions specified in one or more flows and/or block diagrams in the flowchart.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing apparatus, such that a series of operational steps are performed on the computer or other programmable apparatus to produce a computer-implemented process, such that the instructions executing on the computer or other programmable apparatus provide steps for implementing the functions specified in one or more flows of the flowchart and/or one or more blocks of the block diagram.

Evidently those skilled in the art can make various modifications and variations to the disclosure without departing from the spirit and scope of the disclosure. In this way, if these modifications and variations of the present disclosure fall within the scope of the claims of the present disclosure and their equivalent technologies, the present disclosure is also intended to include these modifications and variations.

## Claims

1. A candidate cell configuration method, including:
sending a request message to a first distribution unit DU by a centralized unit CU, wherein the request message is used to request information related to candidate cell configuration of a terminal, wherein the first DU is a DU where a candidate cell is located;
receiving, by the CU, the information related to candidate cell configuration from the first DU; and
configuring, by the CU, candidate cells for the terminal.

2. The method according to claim 1, wherein the request message includes at least one of the following:
identification information of the terminal;
a list of first candidate cells;
cell identification information of the first candidate cells;
physical cell identifier (PCI) information of the first candidate cells;
cell global identifier (CGI) information of the first candidate cells;
frequency information of the first candidate cells;
indication information used to indicate that the request message is used for layer 1 or layer 2 mobility;
information related to a reference signal.

3. The method according to claim 1, wherein the information related to candidate cell configuration includes at least one of the following:
identification information of the terminal;
a list of second candidate cells;
cell identification information of the second candidate cells;
PCI information of the second candidate cells;
CGI information of the second candidate cells;
frequency information of the second candidate cells;
a list of third candidate cells;
assistance information of handover decision;
information related to a reference signal;
cell configuration information.

4. The method according to claim 3, wherein the information related to a reference signal includes at least one of the following:
synchronization signal block (SSB) information of the second candidate cells;
Transmission Configuration Indicator (TCI) information of the second candidate cells;
information related to a layer 1 channel state reference signal (CSI-RS) of the second candidate cells.

5. The method according to claim 3, wherein the cell configuration information includes at least one of the following:
layer 2 configuration information of the second candidate cells;
layer 3 configuration information of the second candidate cells;
resource information reserved for a physical layer of the second candidate cells;
indication information used to indicate that the cell configuration information is used for layer 1 or layer 2 mobility.

6. The method according to any one of claims 1 to 5, wherein the first candidate cells requested in the request message are at least partially the same as or different from the second candidate cells configured in the information related to candidate cell configuration.

7. The method according to claim 1, wherein the sending a request message to the first distribution unit DU includes one of the following:
sending the request message to the first DU by extending a first interface message;
sending the request message to the first DU by reusing a first interface message;
sending the request message to the first DU by newly creating a first interface message.

8. The method according to claim 1, wherein configuring the candidate cell for the terminal includes:
sending the information related to candidate cell configuration to a second DU through a first interface;
wherein the second DU is a DU where a serving cell currently accessed by the terminal is located.

9. The method according to claim 8, wherein the sending the information related to candidate cell configuration to the second DU through the first interface includes one of the following:
sending the information related to candidate cell configuration to the second DU by extending a first interface message;
sending the information related to candidate cell configuration to the second DU by reusing a first interface message;
sending the information related to candidate cell configuration to the second DU by newly creating a first interface message.

10. The method according to claim 1, wherein configuring the candidate cells for the terminal includes:
configuring, by using a radio resource control RRC message, the candidate cells for the terminal.

11. The method according to claim 10, wherein configuring the candidate cells for the terminal by using the RRC message includes:
writing the information related to candidate cell configuration into the RRC message, wherein the RRC message is transparently transmitted through the second DU;
or,
sending the information related to candidate cell configuration to the second DU through a first interface; receiving an information element IE from the second DU, wherein the IE includes the information related to candidate cell configuration written by the second DU; writing the IE into the RRC message, wherein the RRC message is transparently transmitted through the second DU;
wherein the second DU is a DU where a serving cell currently accessed by the terminal is located.

12. A candidate cell configuration method, including:
receiving, by a first distribution unit DU, a request message from a centralized unit CU, wherein the request message is used to request information related to candidate cell configuration of a terminal;
sending the information related to candidate cell configuration of the terminal to the CU according to the request message.

13. The method according to claim 12, wherein the request message includes at least one of the following:
identification information of the terminal;
a list of first candidate cells;
cell identification information of the first candidate cells;
physical cell identifier (PCI) information of the first candidate cells;
cell global identifier (CGI) information of the first candidate cells;
frequency information of the first candidate cells;
indication information used to indicate that the request message is used for layer 1 or layer 2 mobility;
information related to a reference signal.

14. The method according to claim 12, wherein the information related to candidate cell configuration includes at least one of the following:
identification information of the terminal;
a list of second candidate cells;
cell identification information of the second candidate cells;
PCI information of the second candidate cells;
CGI information of the second candidate cells;
frequency information of the second candidate cells;
a list of third candidate cells;
assistance information of handover decision;
information related to a reference signal;
cell configuration information.

15. The method according to claim 14, wherein the information related to a reference signal includes at least one of the following:
synchronization signal block (SSB) information of the second candidate cells;
Transmission Configuration Indicator (TCI) information of the second candidate cells;
information related to a layer 1 channel state reference signal (CSI-RS) of the second candidate cells.

16. The method according to claim 14, wherein the cell configuration information includes at least one of the following:
layer 2 configuration information of the second candidate cells;
layer 3 configuration information of the second candidate cells;
resource information reserved for a physical layer of the second candidate cells;
indication information used to indicate that the cell configuration information is used for layer 1 or layer 2 mobility.

17. The method according to any one of claims 12 to 16, wherein the first candidate cells requested in the request message are at least partially the same as or different from the second candidate cells configured in the information related to candidate cell configuration.

18. The method according to claim 12, wherein the sending the information related to candidate cell configuration of the terminal to the CU includes one of the following:
sending the information related to candidate cell configuration to the CU by extending a first interface message;
sending the information related to candidate cell configuration to the CU by reusing a first interface message;
sending the information related to candidate cell configuration to the CU by newly creating a first interface message.

19. The method according to claim 18, wherein the information related to candidate cell configuration is included in the first interface message in one of following patterns:
being explicitly included in the first interface message as an IE;
being implicitly included in an IE sent by the first DU to the CU.

20. A candidate cell configuration apparatus, including:
a memory, a transceiver, and a processor, wherein the memory is configured to store a computer program; the transceiver is configured to receive and send data under the control of the processor; and the processor is configured to read the computer program in the memory;
the transceiver is configured to: send a request message to a first distribution unit DU, wherein the request message is used to request information related to candidate cell configuration of a terminal, wherein the first DU is a DU where a candidate cell is located; receive the information related to candidate cell configuration from the first DU;
the processor is configured to read the computer program in the memory and perform the following operations:
configuring candidate cells for the terminal.

21. The apparatus according to claim 20, wherein the request message includes at least one of the following:
identification information of the terminal;
a list of first candidate cells;
cell identification information of the first candidate cells;
physical cell identifier (PCI) information of the first candidate cells;
cell global identifier (CGI) information of the first candidate cells;
frequency information of the first candidate cells;
indication information used to indicate that the request message is used for layer 1 or layer 2 mobility;
information related to a reference signal.

22. The apparatus according to claim 20, wherein the information related to candidate cell configuration includes at least one of the following:
identification information of the terminal;
a list of second candidate cells;
cell identification information of the second candidate cells;
PCI information of the second candidate cells;
CGI information of the second candidate cells;
frequency information of the second candidate cells;
a list of third candidate cells;
assistance information of handover decision;
information related to a reference signal;
cell configuration information.

23. The apparatus according to claim 22, wherein the information related to a reference signal includes at least one of the following:
synchronization signal block (SSB) information of the second candidate cells;
Transmission Configuration Indicator (TCI) information of the second candidate cells;
information related to a layer 1 channel state reference signal (CSI-RS) of the second candidate cells.

24. The apparatus according to claim 22, wherein the cell configuration information includes at least one of the following:
layer 2 configuration information of the second candidate cells;
layer 3 configuration information of the second candidate cells;
resource information reserved for a physical layer of the second candidate cells;
indication information used to indicate that the cell configuration information is used for layer 1 or layer 2 mobility.

25. The apparatus according to any one of claims 20 to 24, wherein the first candidate cells requested in the request message are at least partially the same as or different from the second candidate cells configured in the information related to candidate cell configuration.

26. The apparatus according to claim 20, wherein the transceiver is specifically configured to perform one of the following:
sending the request message to the first DU by extending a first interface message;
sending the request message to the first DU by reusing a first interface message;
sending the request message to the first DU by newly creating a first interface message.

27. The apparatus according to claim 20, wherein the processor is configured to read the computer program in the memory and perform the following operations:
sending the information related to candidate cell configuration to a second DU through a first interface;
wherein the second DU is a DU where a serving cell currently accessed by the terminal is located.

28. The apparatus according to claim 27, wherein the processor is configured to read the computer program in the memory and perform one of the following operations:
sending the information related to candidate cell configuration to the second DU by extending a first interface message;
sending the information related to candidate cell configuration to the second DU by reusing a first interface message;
sending the information related to candidate cell configuration to the second DU by newly creating a first interface message.

29. The apparatus according to claim 20, wherein the processor is configured to read the computer program in the memory and perform the following operations:
configuring, by using a radio resource control RRC message, the candidate cells for the terminal.

30. The apparatus according to claim 29, wherein the processor is configured to read the computer program in the memory and perform the following operations:
writing the information related to candidate cell configuration into the RRC message, wherein the RRC message is transparently transmitted through the second DU;
or,
sending the information related to candidate cell configuration to the second DU through a first interface; receiving an information element IE from the second DU, wherein the IE includes the information related to candidate cell configuration written by the second DU; writing the IE into the RRC message, wherein the RRC message is transparently transmitted through the second DU;
wherein the second DU is a DU where a serving cell currently accessed by the terminal is located.

31. A candidate cell configuration apparatus, including:
a memory, a transceiver, and a processor:
wherein the memory is configured to store a computer program; the transceiver is configured to receive and send data under the control of the processor; and the processor is configured to read the computer program in the memory;
wherein the transceiver is configured to receive a request message from a centralized unit CU, wherein the request message is used to request information related to candidate cell configuration of a terminal;
the processor is configured to read the computer program in the memory and perform the following operations:
sending the information related to candidate cell configuration of the terminal to the CU according to the request message.

32. The apparatus according to claim 31, wherein the request message includes at least one of the following:
identification information of the terminal;
a list of first candidate cells;
cell identification information of the first candidate cells;
physical cell identifier (PCI) information of the first candidate cells;
cell global identifier (CGI) information of the first candidate cells;
frequency information of the first candidate cells;
indication information used to indicate that the request message is used for layer 1 or layer 2 mobility;
information related to a reference signal.

33. The apparatus according to claim 31, wherein the information related to candidate cell configuration includes at least one of the following:
identification information of the terminal;
a list of second candidate cells;
cell identification information of the second candidate cells;
PCI information of the second candidate cells;
CGI information of the second candidate cells;
frequency information of the second candidate cells;
a list of third candidate cells;
assistance information of handover decision;
information related to a reference signal;
cell configuration information.

34. The apparatus according to claim 33, wherein the information related to a reference signal includes at least one of the following:
synchronization signal block (SSB) information of the second candidate cells;
Transmission Configuration Indicator (TCI) information of the second candidate cells;
information related to a layer 1 channel state reference signal (CSI-RS) of the second candidate cells.

35. The apparatus according to claim 33, wherein the cell configuration information includes at least one of the following:
layer 2 configuration information of the second candidate cells;
layer 3 configuration information of the second candidate cells;
resource information reserved for a physical layer of the second candidate cells;
indication information used to indicate that the cell configuration information is used for layer 1 or layer 2 mobility.

36. The apparatus according to any one of claims 31 to 35, wherein the first candidate cells requested in the request message are at least partially the same as or different from the second candidate cells configured in the information related to candidate cell configuration.

37. The apparatus according to claim 31, wherein the processor is configured to read the computer program in the memory and perform one of the following operations:
sending the information related to candidate cell configuration to the CU by extending a first interface message;
sending the information related to candidate cell configuration to the CU by reusing a first interface message;
sending the information related to candidate cell configuration to the CU by newly creating a first interface message.

38. The apparatus according to claim 37, wherein the information related to candidate cell configuration is included in the first interface message in one of following patterns:
being explicitly included in the first interface message as an IE;
being implicitly included in an IE sent by the first DU to the CU.

39. A candidate cell configuration apparatus, including:
a first sending unit, configured to send a request message to a first distribution unit DU, wherein the request message is used to request information related to candidate cell configuration of a terminal, wherein the first DU is a DU where a candidate cell is located;
a first receiving unit, configured to receive the information related to candidate cell configuration from the first DU;
a configuration unit, configured to configure candidate cells for the terminal.

40. The apparatus according to claim 39, wherein the request message includes at least one of the following:
identification information of the terminal;
a list of first candidate cells;
cell identification information of the first candidate cells;
physical cell identifier (PCI) information of the first candidate cells;
cell global identifier (CGI) information of the first candidate cells;
frequency information of the first candidate cells;
indication information used to indicate that the request message is used for layer 1 or layer 2 mobility;
information related to a reference signal.

41. The apparatus according to claim 39, wherein the information related to candidate cell configuration includes at least one of the following:
identification information of the terminal;
a list of second candidate cells;
cell identification information of the second candidate cells;
PCI information of the second candidate cells;
CGI information of the second candidate cells;
frequency information of the second candidate cells;
a list of third candidate cells;
assistance information of handover decision;
information related to a reference signal;
cell configuration information.

42. The apparatus according to claim 41, wherein the information related to a reference signal includes at least one of the following:
synchronization signal block (SSB) information of the second candidate cells;
Transmission Configuration Indicator (TCI) information of the second candidate cells;
information related to a layer 1 channel state reference signal (CSI-RS) of the second candidate cells.

43. The apparatus according to claim 41, wherein the cell configuration information includes at least one of the following:
layer 2 configuration information of the second candidate cells;
layer 3 configuration information of the second candidate cells;
resource information reserved for a physical layer of the second candidate cells;
indication information used to indicate that the cell configuration information is used for layer 1 or layer 2 mobility.

44. The apparatus according to any one of claims 39 to 43, wherein the first candidate cells requested in the request message are at least partially the same as or different from the second candidate cells configured in the information related to candidate cell configuration.

45. The apparatus according to claim 39, wherein the first sending unit is configured to perform one of the following:
sending the request message to the first DU by extending a first interface message;
sending the request message to the first DU by reusing a first interface message;
sending the request message to the first DU by newly creating a first interface message.

46. The apparatus according to claim 39, wherein the configuration unit includes:
a sending subunit, configured to send the information related to candidate cell configuration to a second DU through a first interface, wherein the information related to candidate cell configuration is forwarded to the terminal by the second DU;
wherein the second DU is a DU where a serving cell currently accessed by the terminal is located.

47. The apparatus according to claim 46, wherein the sending subunit is specifically configured to perform one of the following:
sending the information related to candidate cell configuration to the second DU by extending a first interface message;
sending the information related to candidate cell configuration to the second DU by reusing a first interface message;
sending the information related to candidate cell configuration to the second DU by newly creating a first interface message.

48. The apparatus according to claim 39, wherein the configuration unit is specifically configured to:
configure, by using a radio resource control RRC message, the candidate cells for the terminal.

49. The apparatus according to claim 48, wherein the configuration unit is specifically configured to:
write the information related to candidate cell configuration into the RRC message, wherein the RRC message is transparently transmitted through the second DU;
or,
send the information related to candidate cell configuration to the second DU through a first interface; receive an information element IE from the second DU, wherein the IE includes the information related to candidate cell configuration written by the second DU; write the IE into the RRC message, the RRC message is transparently transmitted through the second DU;
wherein the second DU is a DU where a serving cell currently accessed by the terminal is located.

50. A candidate cell configuration apparatus, including:
a second receiving unit, configured to receive a request message from a centralized unit CU, wherein the request message is used to request information related to candidate cell configuration of a terminal; and
a second sending unit, configured to send the information related to candidate cell configuration of the terminal to the CU according to the request message.

51. The apparatus according to claim 50, wherein the request message includes at least one of the following:
identification information of the terminal;
a list of first candidate cells;
cell identification information of the first candidate cells;
physical cell identifier (PCI) information of the first candidate cells;
cell global identifier (CGI) information of the first candidate cells;
frequency information of the first candidate cells;
indication information used to indicate that the request message is used for layer 1 or layer 2 mobility;
information related to a reference signal.

52. The apparatus according to claim 50, wherein the information related to candidate cell configuration includes at least one of the following:
identification information of the terminal;
a list of second candidate cells;
cell identification information of the second candidate cells;
PCI information of the second candidate cells;
CGI information of the second candidate cells;
frequency information of the second candidate cells;
a list of third candidate cells;
assistance information of handover decision;
information related to a reference signal;
cell configuration information.

53. The apparatus according to claim 52, wherein the information related to a reference signal includes at least one of the following:
synchronization signal block (SSB) information of the second candidate cells;
Transmission Configuration Indicator (TCI) information of the second candidate cells;
information related to a layer 1 channel state reference signal (CSI-RS) of the second candidate cells.

54. The apparatus according to claim 52, wherein the cell configuration information includes at least one of the following:
layer 2 configuration information of the second candidate cells;
layer 3 configuration information of the second candidate cells;
resource information reserved for a physical layer of the second candidate cells;
indication information used to indicate that the cell configuration information is used for layer 1 or layer 2 mobility.

55. The apparatus according to any one of claims 50 to 54, wherein the first candidate cells requested in the request message are at least partially the same as or different from the second candidate cells configured in the information related to candidate cell configuration.

56. The apparatus according to claim 50, wherein the second sending unit is specifically configured to perform one of the following:
sending the information related to candidate cell configuration to the CU by extending a first interface message;
sending the information related to candidate cell configuration to the CU by reusing a first interface message;
sending the information related to candidate cell configuration to the CU by newly creating a first interface message.

57. The apparatus according to claim 56, wherein the information related to candidate cell configuration is included in the first interface message in one of following patterns:
being explicitly included in the first interface message as an IE;
being implicitly included in an IE sent by the first DU to the CU.

58. A processor-readable storage medium, wherein the processor-readable storage medium stores a computer program, and the computer program is configured to cause a processor to execute the method according to any one of claims 1-19.
